# EUROPEAN PATENT SPECIFICATION

(11) **EP 2 707 217 B1**
(45) Date of publication and mention of the grant of the patent: **29.07.2015**
(21) Application number: 12722807.0
(22) Date of filing: 11.05.2012
(51) Int. Cl.: B32B 5/18, B60N 2/58

(54) **METHOD OF MANUFACTURING A FABRIC-LAMINATED FOAM ARTICLE**
VERFAHREN ZUR HERSTELLUNG EINES STOFFBESCHICHTETEN SCHAUMSTOFFARTIKELS
PROCÉDÉ DE FABRICATION D'UN ARTICLE EN MOUSSE LAMELLÉ TEXTILE

(30) Priority: 13.05.2011 GB 201108032; 13.05.2011 GB 201108033
(43) Date of publication of application: 19.03.2014
(73) Proprietor: MAS Innovation (Private) Limited, 02 Colombo (LK)
(72) Inventor: LIYANAGE, Gaya Keerthi, Nittambuwa (LK); VITARANA, Ranil Kirthi, Colombo 5 (LK)
(74) Representative: Talbot-Ponsonby, Daniel Frederick
(86) International application number: PCT/GB2012/051035
(87) International publication number: WO 2012/156691

(56) References cited:
- EP-A2- 0 210 587
- DE-A1-102006 029 026
- FR-A1- 2 510 471
- GB-A- 1 328 007
- US-A- 3 941 633
- US-A- 4 636 425
- US-A- 4 925 513
- US-A- 5 124 368
- US-A- 5 755 901

## Description

### Field of the invention

The present invention relates to a foam composition, a method of preparing the same, and its uses thereof. In particular, the foam composition may be for use in fabric laminated foam articles.

### Background of the invention

An inherent fault of injecting a polyurethane foam mixture onto a fabric substrate is the penetration of the polyurethane mixture into the fabric due to the high pressure flow of the foam mixture from the mix head during early stages of gelation and diffusion of the raw material into the yarn interface by lipophilic or lipophobic properties of the polyurethane material and the yarn. As a result the area of fabric in the impact zone of the polyurethane mix head nozzle is the most susceptible to penetration.

It is common to use a composite layer between the fabric and foam substrates to prevent penetration of the raw materials of the foam composition through the fabric. The composite layer serves the purpose of enhancing the bonding between the mentioned substrates to give good wear resistance properties to the foam and fabric composite while acting as a physical barrier preventing penetration of the raw materials of the foam composition into the fabric. However, a drawback of using such a composite within the substrates is the impaired breathability as a result. For example, this may be the case for automotive seats which will cause an accumulation of heat and moisture between the passenger and the seat, making it very uncomfortable and may even cause damage to the seat over a period of time.

An existing technology in which a composite layer is not used includes the pour-in-place (PIP) technology as described in EP 0210587 and EP 1901828. In the PIP technology which is a non-barrier method, a thin film of PU foam of varying density is used depending on the required breathability and penetration of the product manufactured. The higher the compressed density ratios of PU film the lower the breathability and penetration.

In another method such as that described in US 5,124,368, a temporary barrier is utilised to retard penetration while improving breathability properties. A thermoplastic substrate is introduced as a temporary barrier onto the fabric prior to the foam composition being introduced onto the fabric. Once the foam composition has been exposed to the fabric and curing has taken place, the product is then exposed to high temperatures where the thermoplastic barrier melts. This method, however, does not deliver on expected breathability values and therefore is limited to applications where breathability is not a vital factor. Further, in the case of thinner fabrics, the thermoplastic, once melted, migrates through the fabric and alters the hand feel of the fabric.

Another method is to use an elevated reactive system by employing catalyst to reduce the duration of cream/gel time and cause an exponential rise in the viscosity within that cream time. An example of this method is described in FR 2470566. The inherent rise in viscosity will therefore reduce impact penetration as the foam composition will not be able to pass through the space within the yarns in the fabric. Using such a system to prevent penetration may also reduce reaction times and accelerate curing times, reducing overall cycle times. However, due to this same property of reduced reaction time and accelerated curing time, this system cannot be used to manufacture large articles as creaming and gelling would conclude before the full dosage of the foam composition can be poured and set into the mould. This would leave the product with a ring of layers from the point of pouring outwards with varying density, resilience and uneven curing. A further consequence of using such a method is that elevated levels of catalyst will remain within the finished product. This will cause quality failures due to fogging and staining of the fabric as well as be a health issue if it was to come into contact with the skin.

There is therefore a need for an improved foam composition and method for the manufacturing of a fabric laminated foam article.

### Summary of the invention

The present invention seeks to address these problems, and provides an improved method for the manufacture of a fabric laminated foam article.

According to a first aspect, there is provided a method for the manufacture of a fabric laminated foam article comprising the steps of:
(a) providing a foam composition comprising at least one polyol, at least one isocyanate and at least one catalyst to a mould assembly;
(b) obtaining a foam formed from the foam composition from the mould assembly after a first pre-determined period of time;
(c) contacting a fabric to a surface of the foam; and
(d) optionally curing the foam for a second pre-determined period of time.

According to a particular aspect, the obtaining of step (b) may comprise de-moulding the foam formed from the foam composition. In particular, during the obtaining of step (b), the foam formed from the foam composition does not collapse.

The method may further comprise the step of removing a layer from the surface of foam formed from the foam composition before the step (c). In particular, the step of removing comprises removing a layer of integral skin from the surface of the foam formed from the foam composition.

The first pre-determined period of time may be any suitable period of time. In particular, the first pre-determined period of time may be the time taken for the foam composition to blow or rise completely. Even more in particular, the first pre-determined period of time may be the time taken for a gelling reaction of the foam composition to proceed to a pre-determined level to achieve a suitable level of adhesion. The first pre-determined period of time may be dependent on the foam composition. For example, the first pre-determined period of time may be about 10-60 seconds. In particular, the first pre-determined period of time may be about 10-60, 15-50, 20-45, 25-40, 30-35 seconds. Even more in particular, the first pre-determined period of time may be about 10-35 seconds.

The second pre-determined period of time may be any suitable period of time. In particular, the second pre-determined period of time may be the time taken for the foam composition to cure. For example, the second pre-determined period of time may be the time taken for the foam composition to cure completely. The second pre-determined period of time may be dependent on the foam composition. For example, the second pre-determined period of time may be ≥ 10 seconds. The second pre-determined period of time may be about 15-115 seconds. In particular, the second pre-determined period of time may be about 15-115, 20-100, 25-90, 30-85, 35-80, 40-75, 45-70, 50-65, 55-60 seconds. Even more in particular, the second pre-determined period of time may be about 60-90 seconds.

The foam composition may comprise any polyol suitable for the purposes of the present invention. For example, the polyol may be a polyether or a polyester. According to a particular aspect, the polyol may comprise a cross-linking polyol. According to another particular aspect, the polyol may have a molecular weight in the range 300-7000 Da, 500-6500 Da, 1000-6000 Da, 2000-5500 Da, 3500-5000 Da, 3800- 4800 Da, 4000-4500 Da. In particular, the polyol may have a molecular weight of about 3500-6000 Da. The polyol may comprise a di-functional polyol, a tri-functional polyol, a tetra-functional polyol or a combination thereof. The polyol may comprise a primary hydroxyl group terminated polyol. In particular, the at least one polyol may comprise an ethylene oxide terminated polyol.

The foam composition may comprise any isocyanate suitable for the purposes of the present invention. According to a particular aspect, the isocyanate may comprise an isocyanate content of about 2.4-49%. In particular, the isocyanate content may be 5-45%, 10-40%, 17-38%, 20-35%, 25-30%. Even more in particular, the isocyanate content may be about 28-32%. According to another particular aspect, the isocyanate may comprise an aromatic, aliphatic, pre-polymer isocyanate, or a combination thereof. Examples of suitable isocyanates include, but are not limited to, toluene diisocyanate, diphenylmethane diisocyanate, or a combination thereof.

The foam composition may comprise a suitable amount of isocyanate. For example, the amount of isocyanate comprised in the foam composition may be calculated stoichiometrically based on the hydroxyl percentage of the polyol mixture. In particular, the foam composition may comprise isocyanate in an amount of about 20-100, 30-90, 35-85, 40-80, 50-70, 55-65 parts per hundred parts (pphp) of polyol comprised in the foam composition. Even more in particular, the foam composition may comprise isocyanate in an amount of about 30-45 pphp of polyol.

The foam composition may comprise any catalyst suitable for the purposes of the present invention. According to a particular aspect, the catalyst may comprise a gelling catalyst and a blowing catalyst. Any suitable gelling catalyst and blowing catalyst may be used for the purposes of the present invention. For example, the gelling catalyst may include, but is not limited to, 1,4-diazabicyclo [2.2.2] octane, N-(3-dimethylaminopropyl)-N,N-diisopropanolamine, dibutyl tin dilaurate and stannous octoate. For example, the blowing catalyst may include, but is not limited to, bis(2-dimethylaminoethyl)ether, N,N-dimethylethanolamine and N,N,N'-trimethyl-N'-hydroxyethyl-bisaminoethylether.

A suitable amount of the gelling catalyst and blowing catalyst may be comprised in the foam composition. In particular, the ratio of the gelling catalyst to the blowing catalyst may be in the range of about 5:1 to 30:1, 8:1 to 25:1, 10:1 to 20:1, 12:1 to 15:1. Even more in particular, the ratio of the gelling catalyst to the blowing catalyst may be in the range of about 10:1 to 15:1.

The foam composition may further comprise at least one surfactant. Any suitable surfactant for the purposes of the present invention may be comprised in the foam composition. For example, the surfactant may be a silicon-based surfactant. In particular, the surfactant may have a molecular weight of about 5000-30000 Da.

According to a particular aspect, the foam composition may comprise at least one first order surfactant and at least one second order surfactant. Any suitable first order surfactant and second order surfactant may be comprised in the foam composition. For example, the first order surfactant may include, but is not limited to, Tegostab B4690 (Evonik). For example, the second order surfactants may include, but is not limited to, Tegostab B8736LF2 (Evonik).

The first order surfactant and the second order surfactant may be comprised in the foam composition in suitable amounts. For example, the ratio of the first order surfactant to the second order surfactant comprised in the foam composition may be about 1:1 to 4:1. In particular, the ratio of the first order surfactant to the second order surfactant may be 1:1 to 4:1, 1.5:1 to 3:1, 2:1 to 2.5:1. Even more in particular, the ratio may be 1.5:1 to 2.5:1.

The foam composition may further comprise at least one blowing agent. Any suitable blowing agent for the purposes of the present invention may be comprised in the foam composition. For example, the blowing agent may be water, hydrocarbon, halogenated hydrocarbon, or a combination thereof. In particular, the blowing agent may be water. A suitable amount of blowing agent may be comprised in the foam composition. In particular, the amount of blowing agent comprised in the foam composition may be about 1-15, 2-10, 3-8, 6-7 parts per hundred parts (pphp) of polyol comprised in the foam composition.

According to a second aspect, the present invention provides a method for the manufacture of a fabric laminated foam article comprising the steps of:
(a) providing a foam composition comprising a polyol, an isocyanate and a catalyst to a first mould;
(b) bringing a second mould and the first mould towards each other to enable the second mould to contact the foam composition;
(c) separating the first mould and the second mould after a first pre-determined period of time to obtain a foam formed from the foam composition;
(d) contacting a fabric with a third mould, the fabric further contacting a surface of the foam at a pre-determined rate of impact;
(e) curing the foam composition for a second pre-determined period of time to form a foam article; and
(f) removing the foam article.

According to a particular aspect, during the separating step (c), the foam formed from the foam composition does not collapse.

The method may further comprise the step of removing a layer from the surface of foam formed from the foam composition after the separating step (c). In particular, the step of removing comprises removing a layer of integral skin from the surface of the foam formed from the foam composition. Even more in particular, the layer of integral skin removed from the surface of the foam may be attached to the surface of the first mould.

In particular, in the step (d) of fabric contacting the foam, the surface of the fabric contacting a surface of the foam is opposite to the surface of the fabric in contact with third mould.

The pre-determined rate of impact may be any suitable pre-determined rate of impact. For example, the pre-determined rate of impact may be about ≤20 mm/second (mm/s). In particular, the pre-determined rate of impact may be about ≤ 15 mm/s, ≤ 10 mm/s, ≤8 mm/s, ≤5 mm/s, ≤3 mm/s. Even more in particular, the pre-determined rate of impact may be ≤5 mm/s.

The first pre-determined period of time and the second pre-determined period of time may be as described above. The polyol, isocyanate and catalyst comprised in the foam composition may be as described above.

According to a third aspect, there is provided an article of manufacture comprising the fabric laminated foam article manufactured according to any method described above. The article of manufacture may be any suitable article of manufacture. For example, the article of manufacture may comprise, but is not limited to, a car seat, a head rest, furniture, a diving suit or protective clothing. The article of manufacture may also comprise a breast covering garment. In particular, the breast covering garment may be a bra, particularly a bra cup.

### Brief Description of the Drawings

In order that the invention may be fully understood and readily put into practical effect there shall now be described by way of non-limitative example only exemplary embodiments, the description being with reference to the accompanying illustrative drawings. In the drawings:
Figure 1: A graph of % of blowing reaction reached and % tackiness vs time;
Figure 2: A sectional side orthographic view of a first male mould;
Figure 3: A sectional side orthographic view of a first male mould lined with a fabric liner;
Figure 4: A sectional side orthographic view of a first female mould;
Figure 5: A sectional side orthographic view of a first female mould lined with a fabric liner;
Figure 6: A sectional side orthographic view showing the foam composition being poured into a second female mould;
Figure 7: A sectional side orthographic view showing the closure of the second female mould with a second male mould;
Figure 8: A sectional side orthographic view showing the closure of the second female mould with the first male mould of Figure 3; and
Figure 9: A sectional side orthographic view showing the closure of the first female mould of Figure 5 with the male mould of Figure 8.

### Detailed description of the invention

The method of the present invention seeks to provide an improved method of manufacturing a fabric-laminated foam article. In particular, the method of the present invention seeks to overcome the problem of penetration of the foam composition into the fabric in the fabric laminated foam article.

According to a first aspect, there is provided a method for the manufacture of a fabric laminated foam article comprising the steps of:
(a) providing a foam composition comprising at least one polyol, at least one isocyanate and at least one catalyst to a mould assembly;
(b) obtaining a foam formed from the foam composition from the mould assembly after a first pre-determined period of time;
(c) contacting a fabric to at least one surface of the foam; and
(d) optionally curing the foam for a second pre-determined period of time.

Any suitable foam composition may be used for the purposes of the present invention. The foam composition used for the purposes of the present invention may be dependent on the foam article being manufactured by the method. In particular, the foam composition is such that during the obtaining step (b), the foam formed from the foam composition does not collapse. Even more in particular, the obtaining step (b) takes place when the gelling reaction of the foam composition is still taking place. Therefore, it may be possible that the cell struts of the foam formed from the foam composition may break during the obtaining step (b) which may lead to foam collapse. However, the foam composition used in the method of the present invention overcomes the problem of foam collapse in view of the use of suitable polyols comprised in the foam composition which strengthen the strut structure and stabilise the foam structure of the foam formed from the foam composition.

The foam prepared from the foam composition and used in the fabric-laminated article may be any suitable foam. For example, the foam may be polyurethane foam.

The foam composition comprises at least one polyol, at least one isocyanate and at least one catalyst.

The foam composition may comprise any polyol suitable for the purposes of the present invention. In particular, the polyol, or blends thereof, comprised in the foam composition may depend on the end use of the foam to be produced from the foam composition. The specific foam application may influence the choice of the polyol. The molecular weight or hydroxyl number of the polyol may be selected so as to result in a particular type of foam when the polyol is converted to the foam.

In particular, the selection of molecular weight and hydroxyl number of a polyol may be based on the resultant activity and other elasticity properties of the resultant foam. For example, in the case of a rigid or semi-rigid foam product, it is possible to use smaller molecular weights and higher hydroxyl number polyols known in the art.

For example, suitable polyols may be selected for making polyurethane. Polyols which are useful for making polyurethane, particularly via the one-shot foaming process, are any of the types presently employed in the art for the preparation of flexible slabstock foams, flexible moulded foams, semi-flexible foams, and rigid foams.

According to a particular aspect, the polyol may have a molecular weight in the range 300-7000 Da, 500-6500 Da, 1000-6000 Da, 2000-5500 Da, 3500-5000 Da, 3800-4800 Da, 4000-4500 Da. In particular, the polyol may have a molecular weight of about 3500-6000 Da. For example, if the foam to be prepared from the foam composition is a flexible foam, the molecular weight of the polyol comprised in the foam composition may be in the range of about 3500-7000 Da. In particular, the molecular weight of the polyol comprised in the foam composition may be in the range of about 4500-6000 Da. For example, if the foam to be prepared from the foam composition is a semi-flexible foam, the molecular weight of the polyol comprised in the foam composition may be in the range of about 1000-2500 Da. In particular, the molecular weight of the polyol comprised in the foam composition may be in the range of about 1500-2000 Da. For example, if the foam to be prepared from the foam composition is a rigid foam, the molecular weight of the polyol comprised in the foam composition may be in the range of about 250-900 Da. In particular, the molecular weight of the polyol comprised in the foam composition may be in the range of about 350-500 Da.

According to a particular aspect, the at least one polyol comprised in the foam composition comprises a cross-linking polyol. In particular, the foam composition may comprise at least 10% by weight of a cross-linking polyol. The cross-linking polyol may have a molecular weight of about 350-3800 Da. In particular, the cross-linking polyol may have a molecular weight of about 500-3500 Da, 750-3000 Da, 1000-2500 Da, 1500-2000 Da. The use of a cross-linking polyol in the foam composition may impart three-dimensional modular strength in the foam formed from the foam composition during and/or after the step (b). The cross-linking polyol may also promote the adhesive properties of the foam formed from the foam composition due to the unreacted functionalities of the polyol during step (b) of the method of the present invention. Examples of suitable cross-linking polyols include, but are not limited to, Lupranol 9350 (BASF) and Sumiphen VB (Bayer Material Science).

The at least one polyol may have a hydroxyl number in the range of about 15-400, 25-390, 35-380, 40-375, 55-350, 60-300, 70-250, 75-200, 80-150, 85-100, 90-95. In particular, if the foam to be prepared from the foam composition is a flexible foam, the hydroxyl number of the polyol is about 20-70. The hydroxyl number is defined as the number of milligrams of potassium hydroxide required for the complete hydrolysis of the fully phthalated or acetylated derivative prepared from one gram of polyol. If the foam to be prepared from the foam composition is a semi-flexible foam, the hydroxyl number of the polyol is about 100-300. If the foam to be prepared from the foam composition is a rigid foam, the hydroxyl number of the polyol is about 250-400.

According to another particular aspect, the at least one polyol may comprise a difunctional polyol, a tri-functional polyol, a tetra-functional polyol or a combination thereof. For example, for flexible foams, the preferred functionality, i.e., the average number of hydroxyl groups per molecule of polyol, of the polyols is about 2 to about 4 and more particularly about 2.3 to about 3.5. For rigid foams the preferred functionality is about 2 to about 8 and more particularly about 3 to about 5. The polyol may comprise diols, triols, tetraols and higher functionality polyols which may be end-capped with primary hydroxyl groups. In particular, the polyols may be end-capped by ethylene oxide as dictated by the reactivity requirements under cold cure conditions. The ethylene oxide, when used, may be incorporated in any fashion along the polymer chain. In particular, the ethylene oxide may be incorporated either in internal blocks, as terminal blocks, or may be randomly distributed along the polyol chain. In total, the ethylene oxide content may be from 8-30% of the total polymer. For example, the polyol may be a polyether polyol or a polyester polyol. In particular, the polyols may be poly (oxypropylene) polyols.

The at least one polyol may comprise a primary hydroxyl group terminated polyol. In particular, primary hydroxyl group terminated polyols may be used to achieve a higher level of activity. In particular, the at least one polyol may comprise an ethylene oxide terminated polyol. A skilled person would understand that primary hydroxyl group terminated polyols are about five times more active than secondary hydroxyl group terminated polypropylene polyols. The molecular weight of the polyol also determines the softness of the resultant foam. The polyol may be characterized by having at least 75% primary hydroxyl groups as measured by ASTM D-4273. In particular, the polyol may have at least 85% primary hydroxyl groups as measured by ASTM D-4273. According to a particular aspect, the polyol may have 20-30% terminally ethylene hydroxyl group and 70% pendant polypropylene groups having hydroxyl number of about 20-40 mg KOH/g. In particular, the polyol may have a hydroxyl number of about 22-29 mg KOH/g.

Examples of polyols suitable for the purposes of the present invention include, but are not limited to, Lupranol 2046 (BASF), Arcol Polyol 3553 (Bayer Material Science) and Voranol 4701 (Dow Chemicals).

The at least one polyol according to the present invention may also include a copolymer polyol. The use of a copolymer polyol in the foam composition may provide the resultant foam with resilience and load bearing capacities. The copolymer polyol may be any suitable polyol. For example, the copolymer polyol may be a polyol comprising styrene acrylonitrile content of about 20-45%, particularly 43%, with hydroxyl number of about 18-22 and a molecular weight range from about 3500-6000 Da, particularly in the range 3800-4000 Da. The copolymer polyol may include, but is not limited to, Lupranol 4800 (BASF), Hyperlite 1639 (Bayer Material Science), Hyperlite E851 (Bayer Material Science) and Voranol 3943A (Dow Chemicals). According to a particular aspect, the foam composition may comprise 10-20% of a copolymer polyol, based on the total polyol content in the foam composition.

The at least one polyol may also comprise a modifier polyol with terminal primary hydroxyl groups as described above. The polyol may have a higher molecular weight ranging from about 6000-10000 Da, in particular about 7000 Da with a hydroxyl number of about 25-30. An example of such a polyol is Lupranol 2090 (BASF). These polyols are tri-functional to facilitate the moderate cross reactivity.

The at least one polyol may also be included in the foam composition to preserve the modulus and the strength of the foam. The polyol may be self catalyst amino initiated polyol. The self catalyst polyol may reduce the level of catalyst and promote the gelation rate without adversely affecting the other properties. Examples of these polyols include, but not limited to, Voranol Voractive 7010 (Dow Chemicals) and Voranol Voractive 8000 (Dow Chemicals).

The at least one polyol may comprise an ethylene diamine initiated tetra-functional self catalyst polyol of molecular weight of about 3400 Da and hydroxyl number of about 60 (such as Lupranol VP9350 (BASF)).

In order to ensure the higher order of reactivity in the polyol mixture, the at least one polyol in the foam composition may comprise polyether triamines or tetraamines having molecular weight of about 3250-6000 Da and having an amine value of about 25-38. For the purposes of the present invention, "amine value" may be defined as the number of milligrams of potassium hydroxide required to hydrolyse the acetylated or pthalated derivative of 1 g of amine. These polyether amines may minimize the catalyst concentration used in the foam composition. Examples of such polyether amines include polyether triamine having a molecular weight of about 4000-7000 Da, particularly 6000 Da. In particular, the foam composition may comprise 1-5% of a polyether triamine based on the total polyol content in the composition, such as CTA 6000 (Clariant).

In addition to these conventional polyols, polymer polyols may be used alone or blended with other polyols. Polymer polyols are well known in the art. Such compositions may be produced by polymerizing one or more ethylenically unsaturated monomer dissolved or dispersed in a polyol in the presence of a free radical catalyst to form a stable dispersion of polymer particles in the polyol. These polymer polyol compositions have the valuable property of imparting to polyurethane foams produced therefrom higher load-bearing properties than are provided by the corresponding unmodified polyols.

The monomer content may be typically selected to provide the desired solids content required for the anticipated end-use application. In general, it will usually be desirable to form the polymer polyols with as high a resulting polymer or solids contents as will provide the desired viscosity and stability properties. For typical high resilience (HR) foam formulations, solids content of up to about 45 weight percent or more are feasible and may be provided.

Any suitable isocyanate suitable for the purposes of the present invention may be comprised in the foam composition. According to a particular aspect, the at least one isocyanate may be an isocyanate having an isocyanate content of about 2.4-49%. In particular, the isocyanate content may be 5-45%, 10-40%, 17-38%, 20-35%, 25-30%. Even more in particular, the isocyanate content may be about 28-32%.

The isocyanate content may be defined as the weight percentage of reactive isocyanates (-NCO group) in an isocyanate, modified isocyanate or pre-polymer isocyanate.

According to another particular aspect, the at least one isocyanate comprised in the foam composition may be an aromatic, aliphatic, prepolymer isocyanate, or a combination thereof. The at least one isocyanate avoids cross-linking and delayed hardening due to secondary allophanate and biuret reactions. For example, organic polyisocyanates that are useful in producing polyurethane foam may include organic compounds that contain at least two isocyanato groups and generally will be any of the known aromatic or aliphatic polyisocyanates. Such compounds are well-known in the art. Suitable organic polyisocyanates include the hydrocarbon diisocyanate (e.g. the alkylene diisocyanates and the arylene diisocyanates) such as 2,4- and 4,4'-methylene diphenyl diisocyanate (MDI) and 2,4- and 2,6-toluene diisocyanate (TDI), as well as known tri-isocyanates and polymethylene poly(phenylene isocyanates) also known as polymeric or crude MDI. In particular, the isocyanate may be toluene diisocyanate (TDI), diphenylmethane diisocyanate (MDI), or a combination thereof.

Non-limiting examples of other suitable polyisocyanates are 2,4-diisocyanatotoluene; 2,6-diisocyanatotoluene; methylene bis(4-cyclohexyl isocyanate); 1,8-diisocyanatooctane; 1,5-diisocyanato-2,2,4-trimethylpentane; 1,9-diisocyanatononane; 1,10-diisocyanatopropylether of 1,4-butylene glycol; 1,11-diisocyanatoundecane; 1,12-diisocyanatododecane bis(isocyanatohexyl)sulfide; 1,4-diisocyanatobenzene; 3,5-diisocyanato-o-xylene; 4,6-diisocyanato-m-xylene; 2,6-diisocyanato-p-xylene; 2,4-diisocyanato-1-chlorobenzene; 2,4-diisocyanato-1-nitrobenzene; 2,5-diisocyanato-1-nitrobenzene; 4,4'-diphenylmethylene diisocyanate; 2,4'-diphenylmethylene diisocyanate; and polymethylene poly(phenylene isocyanates) and mixtures thereof.

For flexible and semi-flexible foams, the preferred isocyanates generally are, e.g., mixtures of 2,4-tolulene diisocyanate and 2,6-tolulene-diisocyanate (TDI) in proportions by weight of about 80% and about 20% respectively and also about 65% and about 35% respectively; mixtures of TDI and polymeric MDI, preferably in the proportion by weight of about 80% TDI and about 20% of crude polymeric MDI to about 50% TDI and about 50% crude polymeric MDI; and all polyisocyanates of the MDI type. For rigid foams, the preferred isocyanates are, e.g., polyisocyanates of the MDI type and preferably crude polymeric MDI.

The foam composition may comprise a suitable amount of isocyanate. In particular, the foam composition may comprise isocyanate in an amount of about 20-100, 30-90, 35-85, 40-80, 50-70, 55-65 parts per hundred parts (pphp) of polyol comprised in the foam composition. Even more in particular, the foam composition may comprise isocyanate in an amount of about 30-45 pphp of polyol.

Any suitable catalyst for the purposes of the present invention may be comprised in the foam composition. A catalyst suitable for the purposes of the present invention may be defined as a catalyst which accelerates the reaction between isocyanates and polyols in the formation of foams. The catalyst may also accelerate the reaction between isocyanates and water in the formation of foams. The catalysts contribute towards the gelling and/or blowing reactions in the formation of foams. According to a particular aspect, the catalyst may be an amine catalyst. In particular, the catalyst may be a tertiary amine catalyst.

According to a particular aspect, the at least one catalyst comprised in the foam composition may comprise a gelling catalyst and a blowing catalyst. A gelling catalyst may be defined as a catalyst which predominantly catalyses the process of gelation in the formation of foam. The foam may be polyurethane or its derivatives. A blowing catalyst may be defined as a catalyst which predominantly catalyses the reaction between isocyanate and water to yield carbamic acid, the decomposition of which results in the generation of carbon dioxide, which contributes to the generation of foam cells in foam formation. The foam may be polyurethane or its derivatives.

Any suitable gelling catalyst and blowing catalyst may be used for the purposes of the present invention. For example, the gelling catalyst may include, but is not limited to, 1,4-diazabicyclo [2.2.2] octane, N-(3-dimethylaminopropyl)-N,N-diisopropanolamine, dibutyl tin dilaurate and stannous octoate. For example, the blowing catalyst may include, but is not limited to, bis(2-dimethylaminoethyl)ether, N,N-dimethylethanolamine and N,N,N'-trimethyl-N'-hydroxyethyl-bisaminoethylether.

A suitable amount of the gelling catalyst and blowing catalyst may be comprised in the foam composition. In particular, the ratio of the gelling catalyst to the blowing catalyst may be in the range of about 5:1 to 30:1, 8:1 to 25:1, 10:1 to 20:1, 12:1 to 15:1. Even more in particular, the ratio of the gelling catalyst to the blowing catalyst may be in the range of about 10:1 to 15:1.

The foam composition may further comprise at least one surfactant. Any suitable surfactant for the purposes of the present invention may be comprised in the foam composition. For example, the surfactant may be a silicon-based surfactant. In particular, the surfactant may have a molecular weight of about 5000-30000 Da.

The silicon-based surfactant may achieve cell stabilisation and uniform distribution of cells in the resultant foam. The silicon-based surfactant may be derivatives of poly(dimethylsiloxane) oil derivatives wherein the polysiloxanes are linked with terminal polyoxyalkylene blocked copolymer groups consisting of 5 to 30 carbon atoms, more particularly 10 to 15 carbon atoms, through silicon to carbon, or silicon to oxygen to carbon bonds. The respective polyoxyalkylene blocks are bonded to different silicon atoms in the polysiloxane backbone, resulting in branched molecular structures or linear molecular structures. The terminal polysiloxane block may be end capped by trialkyl siloxy group in addition to the siloxy groups by which siloxane backbone is formed. The polysiloxane block may be end capped by difunctional siloxy units of which the two remaining valences may be satisfied by bonding to organic radicals. Examples of such organic radicals include hydrocarbyl groups having 1-12 carbon atoms including alkyl, aryl, arylalkyl, bicycloheptyl or halogen substituted derivatives of such groups. The polyoxyalkylene groups may be constituted of oxyethylene units, oxopropylene units or a combination thereof. These blocks may be terminated by hydroxyl groups or capped with monovalent groups such as alkyl, aryl, arylalkyl, acyl carbamyl and the like. According to a particular aspect, the silicon-based surfactant may comprise a siloxane group comprising 30-70% of the molecular structure. The silicon to carbon linked groups are not hydrolysable whereas silicon, oxygen to carbon are hydrolysable, and therefore the former group is utilised for long term effect while the latter is used for short term gain.

Examples of suitable silicon-based surfactants include "hydrolysable" polysiloxane-polyoxyalkylene block copolymers, "non-hydrolysable" polysiloxane-polyoxyalkylene block copolymers, cyanoalkylpolysiloxanes, alkylpolysiloxanes, and polydimethylsiloxane oils. Other examples of surfactants may include Tegostab 8736LF2 (Evonik), which contributes to the achieving of the mild surfactant action in the fast system, and Tegostab 4690 (Evonik), which contributes to the achieving of regular cell size distribution yielding uniform cell sizes according to the product requirement.

The type of surfactant used and the amount required depends on the type of foam produced as recognized by those skilled in the art. Silicon-based surfactants may be used as such or dissolved in solvents such as glycols. For flexible foams the reaction mixture may contain about 0.1-6 pphp, particularly 0.7-2.5 pphp of silicon-based surfactant. For flexible molded foam the reaction mixture may contain about 0.1-5 pphp, particularly 0.5-2.5 pphp of silicon-based surfactant. For rigid foams the reaction mixture may contain about 0.1-5 pphp, particularly 0.5-3.5 pphp of silicon-based surfactant. The amount of surfactant added in the preparation of the foam composition may be adjusted to achieve the required foam cell structure and foam stabilization.

According to a particular aspect, the foam composition may comprise at least one first order surfactant and at least one second order surfactant. For the purposes of the present invention, a first order surfactant may be defined as surfactants which form thick lamellar structures within the foam structure around the air nuclei which are of indeterminate size distribution. These lamellar structures grow into bigger cells during the subsequent infusion of carbon dioxide into the lamellar structures. In contrast, the second order surfactants regulate the size distribution of the subsequent cell structures by regulating the lamellar growth in the foam structure.

In particular, a first order surfactant may dominantly affect the stability of the foam composition during the initial stage of foaming by preserving the green strength of the foam. Green strength of a foam may be defined as the modular strength remaining within the foam before the complete curing of the foam has taken place. The first order surfactant may stabilise the overall blowing reaction. A second order surfactant may avoid the breakthrough blisters and the random fusion of the cells during the formation of the foam. The second order surfactant may maintain homogeneous cell size distribution during the blowing reaction.

Any suitable first order surfactant and second order surfactant may be comprised in the foam composition. For example, the first order surfactant may include, but is not limited to, Tegostab B4690 (Evonik). For example, the second order surfactants may include, but is not limited to, Tegostab B8736LF2 (Evonik).

The first order surfactant and the second order surfactant comprised in the foam composition may be in suitable amounts. For example, the ratio of the first order surfactant to the second order surfactant comprised in the foam composition may be about 1:1 to 4:1. In particular, the ratio of the first order surfactant to the second order surfactant may be 1:1 to 4:1, 1.5:1 to 3:1, 2:1 to 2.5:1. Even more in particular, the ratio may be 1.5:1 to 2.5:1.

According to a particular aspect, the cell size of the foam structure may be increased by reducing the surfactant concentration in the composition. According to another particular aspect, the cell size of the foam structure may be increased by reducing the strength of the surfactant. In addition, the density of the composition may be reduced by any suitable method to achieve more controlled foam-fabric interactions such as better hand feel of the composition, reduction of penetration of the foam composition into the fabric or improve fabric adhesion to the foam pad. An example of a method to reduce the density of the foam composition comprises pre-frothing of the foam composition comprising the polyol and isocyanate using liquid carbon dioxide.

The foam composition may further comprise at least one blowing agent. Any suitable blowing agent for the purposes of the present invention may be comprised in the foam composition. For example, the blowing agent may be water, hydrocarbon, halogenated hydrocarbon, or a combination thereof. In particular, the blowing agent may be water. Any suitable blowing agent may be used for the purposes of the present invention. For example, the blowing agent may be water and/or halogenated hydrocarbons. Examples of suitable halogenated hydrocarbons include, but are not limited to, trichloromonofluoromethane, dichlorodifluoromethane, dichloromonofluoromethane, dichloromethane, trichloromethane, 1,1-dichloro-1-fluoroethane, 1,1,2-trichloro-1,2,2-trifluoroethane, hexafluorocyclobutane and octafluorocyclobutane. According to a particular aspect, the use of halocarbon blowing agents is avoided. In particular, the at least one blowing agent may be water.

Enolizable compounds such as nitroalkanes, aldoximes, nitro urea, acid amides may also be used as blowing agents. In particular, boric acid may be used as a blowing agent in the preparation of flexible foams.

Any suitable amount of blowing agent may be comprised in the foam composition. The quantity of blowing agent employed may vary with factors such as the density desired in the foam. In particular, the amount of blowing agent comprised in the foam composition may be about 1-15, 2-10, 3-8, 6-7 parts per hundred parts (pphp) of polyol comprised in the foam composition.

Water may be used as a reactive blowing agent in the formation of both flexible and rigid foams. In the production of flexible slabstock foams, water may be used in concentrations of about 2-6.5 pphp of polyol, particularly 3.5-5.5 pphp. Water levels for TDI moulded foams may range from about 3-4.5 pphp. For MDI moulded foam, the water level may be in the range of about 2.5-5 pphp. Rigid foam water levels, for example, range from 0.5-5 pphp, particularly 0.5-1 pphp.

The foam composition may further comprise any other suitable additive. According to a particular aspect, the foam composition may comprise the step of adding cross-linkers. For example, cross-linkers may be used in the preparation of a foam composition for use in the production of polyurethane foams. Cross-linkers are typically small molecules; usually having a molecular weight of less than 350 Da, which contain active hydrogen for reaction with the isocyanate. The functionality of a cross-linker is greater than 3 and preferably between 3 and 5. The amount of cross-linker used can vary between about 0.1 pphp and about 20 pphp and the amount used is adjusted to achieve the required foam stabilization or foam hardness. Examples of cross-linkers include glycerine, diethanolamine, triethanolamine and tetrahydroxy ethylethylenediamine.

According to a particular aspect, the foam composition may comprise a balanced catalyst. A balanced catalyst may be defined as a catalyst which contributes to the catalytic process by equally promoting the gelling reaction and the blowing reaction. A balanced catalyst may be added based on the particular reactivity requirement. In particular, the adding of the balanced catalyst may result in the balance of the two competing reactions of gelling reaction and blowing reaction being achieved which may further result in the resultant foam having homogeneous cell size distribution and the prevention of breakage in the form of blisters and cell collapse. Any suitable balanced catalyst may be used for the purposes of the present invention. For example, a balanced catalyst such as bis(dimethylamino propyl) methyl amine may be included in the foam composition. Other examples of a suitable balanced catalyst may include, but not limited to, Polycat 77 (Momentive).

Foams may comprise an open-celled structure. In particular, many flexible foams comprise an open-celled structure which may also provide the dimensional stability. According to a particular aspect, the foam composition may comprise at least one cell opening agent. Any suitable cell opening agent may be used for the purposes of the present invention. In particular, the cell opening agent may be an ethylene oxide polyol. For example, the ethylene oxide polyol may have a molecular weight of about 2000 Da. The ethylene oxide polyol may remove a majority of cell membranes during a curing phase during the formation of a foam. The purpose of the cell opening agent is to provide specific characteristics to the foam prepared from the foam composition. For example, by including a cell opening agent, the foam prepared from the foam composition may be considered to be breathable. By being breathable, a skilled person would understand that the air would have the ability to circulate throughout the foam structure.

The foam composition may comprise a suitable amount of a cell opening agent. In particular, the foam composition may comprise a cell opening agent in an amount 2-3 pphp of polyol. Even more in particular, the amount of the cell opening agent comprised in the foam composition may be about 2.5 pphp of polyol.

The mould assembly used for the method of the present invention may be any suitable mould assembly. The mould assembly may comprise one or more moulds. If the mould assembly comprises two or more moulds, each of the two or more moulds may be movable relative to one another between closed moulding positions and open positions. The mould assembly may be an open or a closed mould assembly. In particular, in an open mould assembly, the mould may not be covered and therefore, the method may comprise closing the mould after the providing of step (a). In the case of a closed mould assembly, a step of closing the mould after the providing of step (a) would not be required.

The providing of step (a) may be carried out by any suitable method. For example, the providing of step (a) may comprise injecting the foam composition into the mould assembly. In particular, the providing of step (a) may comprise injecting the foam composition into the mould assembly and may be carried out by a high pressure mixing unit. In particular, the providing of step (a) may be carried out by a high pressure polyurethane mixing unit. The mixing unit may comprise a variable dosage mix head. Even more in particular, the various components of the foam composition may be fed into the mixing unit to form the foam composition before the providing of the foam composition to a mould assembly.

In step (b), a foam formed from the foam composition is obtained from the mould assembly after a first pre-determined period of time. The first pre-determined period of time may be any suitable period of time from the time of the providing of step (a). In particular, the first pre-determined period of time may be the time taken for the foam composition to blow or rise completely. Even more in particular, the first pre-determined period of time may be the time required for the foam formed from the foam composition to stop rising or blowing after the mould assembly is closed. The first pre-determined period of time may also be the time taken for the foam composition to have undergone a pre-determined level of gelling reaction to achieve a suitable level of adhesion.

The first pre-determined period of time may be dependent on the foam composition. For example, the first pre-determined period of time may be about 10-60 seconds after the mould assembly has been closed. In particular, the first pre-determined period of time may be about 10-60, 15-50, 20-45, 25-40, 30-35 seconds after the mould assembly has been closed. Even more in particular, the first pre-determined period of time may be about 10-35 seconds after the mould assembly has been closed.

The step (b) of obtaining the foam from the mould assembly may comprise demoulding the foam from the mould assembly. In particular, the step (b) of obtaining may comprise opening the mould assembly to de-mould the foam formed from the foam composition. During the obtaining of step (b), the foam formed from the foam composition does not collapse. Accordingly, the step of obtaining the foam may be performed by a pneumatic operated cylinder or servo attachment driven by a motor allowing regulated movement using a programmable device to de-mould the foam and obtain the foam.

The obtaining of step (b) may take place when the gelling reaction of the foam composition is still taking place. Therefore, it may be possible that the cell struts of the foam formed from the foam composition may break during the obtaining of step (b) which may lead to foam collapse. However, the foam composition used in the method of the present invention overcomes the problem of foam collapse in view of the use of suitable polyols comprised in the foam composition which strengthen the strut structure and stabilise the foam structure of the foam formed from the foam composition. In particular, the foam composition used for the purposes of the present invention comprises a suitable amount of at least one cross-linking polyol. Even more in particular, the foam composition used for the purposes of the method of the present invention comprises at least 10% by weight of at least one cross-linking polyol. The presence of a suitable content of the cross-linking polyol in the foam composition stabilises the strut assemblies of the foam cell structure.

The step (c) comprises contacting a fabric to a surface of the foam formed from the foam composition. Any suitable fabric may be used for the purposes of the present invention. For example, the fabric may be single layered or double layered having a weight of 40-300 gsm.

In particular, the step (c) may comprise attaching a fabric to the mould assembly. For example, when the mould assembly comprises two moulds, a fabric may be attached to each of the first mould and the second mould and bringing the first mould and the second mould attached with the fabrics towards the foam composition from opposite sides, thereby forming a fabric-laminated foam article.

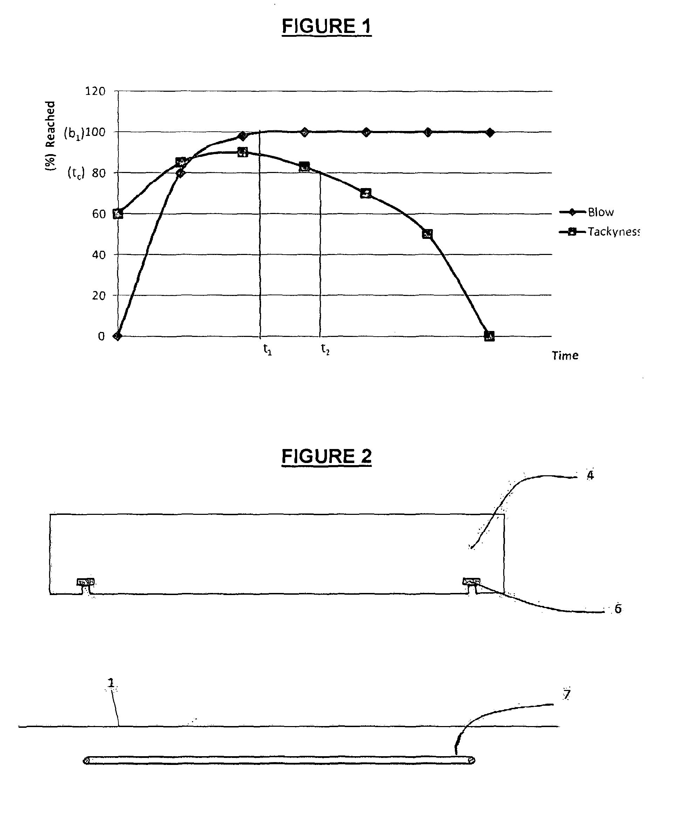

The step (c) may be carried out until the foam formed from the foam composition remains tacky. In particular, the step (c) may be carried out until the foam has an acceptable level of tackiness which may be as denoted by t_{c} in Figure 1. An acceptable level of tackiness may be defined as the level at which the resultant bond between the fabric and the foam composition passes the AATCC standard 124/143.

According to a particular aspect, the step (c) may be repeated at least once. For example, the method may comprise repeating step (c) twice or thrice. In particular, the step (c) may be repeated between the time t₁ and t₂ as shown in Figure 1. Figure 1 shows that step (c) may be repeated until time t₂, which corresponds to the time that tackiness of the foam formed from the foam composition is at an acceptable level of t_{c}. In particular, step (c) may be repeated after de-moulding the foam from the fabric-attached surface of the mould assembly and subsequently allowing the foam to contact another fabric-attached surface.

Step (d) of curing the foam formed from the foam composition may be an optional step. In particular, the step (d) results in the further curing of the foam for a second pre-determined period of time. The second pre-determined period of time may be any suitable period of time. In particular, the second pre-determined period of time may be the time taken for the foam composition to cure. For example, the second pre-determined period of time may be the time taken for the foam composition to cure completely. Even more in particular, the second pre-determined period of time may correspond to the time required for the gelling reaction and blowing reaction to be complete. The second pre-determined period of time may be dependent on the foam composition.

According to a particular aspect, the second pre-determined period of time may be about ≥ 10 seconds after the contacting of step (c). The second pre-determined period of time may be about 15-115 seconds after the fabric has been contacted to the surface of the foam formed from the foam composition. In particular, the second pre-determined period of time may be about 15-115, 20-100, 25-90, 30-85, 35-80, 40-75, 45-70, 50-65, 55-60 seconds. Even more in particular, the second pre-determined period of time may be about 60-90 seconds.

The method may further comprise a step removing a layer from the surface of foam formed from the foam composition before the step (c). In particular, the step of removing comprises removing a layer of integral skin from the surface of the foam formed from the foam composition. The step of removing the layer of integral skin from the surface of the foam may be before the foam is lined with fabric. Even more in particular, during the blowing reaction, an integral skin may be formed on the surface of the foam formed from the foam composition. If a breathable fabric-laminated foam article is required, it may be necessary to remove the integral skin before the contacting of step (c).

"X" may be defined as the distance between the two opposite surfaces of the foam formed from the foam composition in contact with the mould assembly at step (b). "Y" may be defined as the thickness of the foam formed from the foam composition after step (c). According to a particular aspect, X is greater than Y. Even more in particular, the ratio of X:Y may be 1.05:1 - 2:1. The ratio of X:Y may be dependent on the fabriclaminated foam article manufactured.

The method may further comprise a step of heating the mould assembly to a pre-determined temperature before the step (a). The pre-determined temperature may be any suitable temperature, depending on the foam composition used in the method. In particular, the pre-determined temperature may be about 20-100°C.

According to a particular aspect, the method may further comprise a step of trimming the fabric laminated foam article after the step (d). In this way, it is possible to achieve the desired shape and size of the fabric laminated foam article.

According to a particular embodiment of the first aspect of the present invention, there is provided a method for the manufacture of a fabric laminated foam article in an open mould assembly comprising the steps of:
(a) providing a foam composition comprising at least one polyol, at least one isocyanate and at least one catalyst to a first mould;
(b) bringing the first mould and a second mould towards each other to enable the second mould to contact the foam composition;
(c) separating the first mould and the second mould after a first pre-determined period of time to obtain a foam formed from the foam composition;
(d) contacting a fabric to at least one surface of the foam; and
(e) optionally curing the foam for a second pre-determined period of time,
   wherein during the separating step (c), the foam composition does not collapse.

The at least one polyol, isocyanate and catalyst may be as described above.

The providing of step (a) may be carried out by any suitable method. In particular, the providing of step (a) may be carried out as described above. The step (b) may take place immediately after providing the foam composition to the first mould. For example, the step (b) may take place about 1-5 seconds after the providing of step (a).

The step (b) may be carried out by any suitable method. For example, the step (b) may be carried out by a motor. In particular, the step (b) may be performed by a pneumatic cylinder or servo attachment driven by a motor allowing regulated movement using a programmable device.

The separating step (c) may be carried out using any suitable means. For example, the step (c) may be performed by a pneumatic operated cylinder or servo attachment driven by a motor allowing regulated movement using a programmable device to demould the foam and obtain the foam. The separating step (c) may comprise demoulding the foam formed from the foam composition from the mould assembly. In particular, during the step (c), the foam formed from the foam composition does not collapse.

The separating step (c) is carried out after a first pre-determined period of time. The first pre-determined period of time may be any suitable period of time from the time the second mould contacts the foam composition. In particular, the first pre-determined period of time may be the time taken for the foam composition to blow or rise completely. Even more in particular, the first pre-determined period of time may be the time required for the foam formed from the foam composition to stop rising or blowing after the second mould contacts the foam composition. The first pre-determined period of time may also be the time taken for the foam composition to have undergone a pre-determined level of gelling reaction to achieve a suitable level of adhesion.

The first pre-determined period of time may be dependent on the foam composition. For example, the first pre-determined period of time may be about 10-60 seconds after the second mould has contacted the foam composition. In particular, the first pre-determined period of time may be about 10-60, 15-50, 20-45, 25-40, 30-35 seconds after the second mould has contacted the foam composition. Even more in particular, the first pre-determined period of time may be about 10-35 seconds after the second mould has contacted the foam composition.

The step (d) comprises contacting a fabric to a surface of the foam formed from the foam composition. Any suitable fabric may be used for the purposes of the present invention. For example, the fabric may be single layered or double layered having a weight of 40-300 gsm. In particular, the step (d) comprises contacting a fabric to the first mould and/or the second mould and bringing the first mould and the second mould towards the foam composition from opposite sides, thereby forming a fabric-laminated foam article. Even more in particular, the foam formed from the foam composition may be placed between the first mould and the second mould, either or both of which may be contacted with a fabric, thereby forming a fabric-laminated foam article. The step (d) may be carried out until the foam formed from the foam composition remains tacky, as described above.

According to a particular aspect, the step (d) may be repeated at least once, as described above.

Step (e) of curing the foam formed from the foam composition may be an optional step and may be as described above. Accordingly, the second pre-determined period of time may be as described above.

Additional steps to the method may be carried out. For example, the method may further comprise a step of removing a layer from the surface of foam formed from the foam composition before the step (d) as described above. In particular, the step of removing comprises removing a layer of integral skin from the surface of the foam formed from the foam composition.

The method may further comprise the step of heating the first mould and the second mould to a pre-determined temperature before the step (a), as described above. The method may further comprise the step of trimming the fabric-laminated article after the step (e), as described above.

According to another particular embodiment of the first aspect of the present invention, there is provided a method for the manufacture of a fabric laminated foam article in a closed mould assembly comprising the steps of:
(a) providing a foam composition comprising at least one polyol, at least one isocyanate and at least one catalyst to a closed mould assembly;
(b) opening the closed mould assembly to obtain a foam formed from the foam composition after a first pre-determined period of time;
(c) contacting a fabric to at least one surface of the foam; and
(d) optionally curing the foam for a second pre-determined period of time,
wherein the foam composition does not collapse when obtained from the mould assembly during step (b).

The at least one polyol, isocyanate and catalyst may be as described above.

The providing of step (a) may be carried out by any suitable method. In particular, the providing of step (a) may be carried out as described above.

The step (b) may comprise de-moulding the foam formed from the foam composition from the mould assembly. The step (b) may be carried out using any suitable means. For example, the step (b) may be performed by a pneumatic operated cylinder or servo attachment driven by a motor allowing regulated movement using a programmable device to obtain the foam by de-moulding the foam from the mould assembly. In particular, during the step (b), the foam formed from the foam composition does not collapse.

The step (b) is carried out after a first pre-determined period of time. The first pre-determined period of time may be any suitable period of time from the providing of step (a). In particular, the first pre-determined period of time may be the time taken for the foam composition to blow or rise completely. Even more in particular, the first pre-determined period of time may be the time required for the foam formed from the foam composition to stop rising or blowing after the providing of step (a). The first pre-determined period of time may also be the time taken for the foam composition to have undergone a pre-determined level of gelling reaction to achieve a suitable level of adhesion.

The first pre-determined period of time may be dependent on the foam composition. For example, the first pre-determined period of time may be about 10-60 seconds after the providing of step (a). In particular, the first pre-determined period of time may be about 10-60, 15-50, 20-45, 25-40, 30-35 seconds after the providing of step (a). Even more in particular, the first pre-determined period of time may be about 10-35 seconds after the providing of step (a).

The step (c) comprises contacting a fabric to a surface of the foam formed from the foam composition. Any suitable fabric may be used for the purposes of the present invention. For example, the fabric may be single layered or double layered having a weight of 40-300 gsm. The step (c) may be carried out until the foam formed from the foam composition remains tacky, as described above.

Step (d) of curing the foam formed from the foam composition may be an optional step and may be as described above. Accordingly, the second pre-determined period of time may be as described above.

According to a particular aspect, the step (c) may be repeated at least once, as described above.

Additional steps to the method may be carried out. For example, the method may further comprise a step of removing a layer from the surface of foam formed from the foam composition before the step (c) as described above. In particular, the step of removing comprises removing a layer of integral skin from the surface of the foam formed from the foam composition.

The method may further comprise the step of heating the first mould and the second mould to a pre-determined temperature before the providing of step (a), as described above.

The method may further comprise the step of trimming the fabric-laminated article after the step (d), as described above.

According to a second aspect, the present invention provides a method for the manufacture of a fabric laminated foam article comprising the steps of:
(a) providing a foam composition comprising at least one polyol, at least one isocyanate and at least one catalyst to a first mould;
(b) bringing a second mould and the first mould towards each other to enable the second mould to contact the foam composition;
(c) separating the first mould and the second mould after a first pre-determined period of time to obtain a foam formed from the foam composition;
(d) contacting a fabric with a third mould, the fabric further contacting a surface of the foam at a pre-determined rate of impact;
(e) curing the foam composition for a second pre-determined period of time to form a foam article; and
(f) removing the foam article.

In particular, during the separating of step (c), the foam formed from the foam composition does not collapse.

The foam composition used for the method according to the second aspect may be as described above. In particular, the polyol, isocyanate and the catalyst may be as described above. The foam composition may further comprise other additives as described above.

The step (a) of providing a foam composition to the first mould may be as described in relation to step (a) of the method according to the first aspect of the present invention. According to a particular aspect, the step (b) of bringing the first mould and the second mould towards each other takes place about 1-5 seconds after the step (a) of providing the foam composition to the first mould.

The step (b) may be carried out by any suitable method. For example, the step (b) may be carried out by a motor. In particular, the step (b) may be performed by a pneumatic cylinder or servo attachment driven by a motor allowing regulated movement using a programmable device.

The separating step (c) may comprise de-moulding the foam formed from the foam composition from the first mould. The separating step (c) may be carried out using any suitable means. For example, the step (c) may be performed by a pneumatic operated cylinder or servo attachment driven by a motor allowing regulated movement using a programmable device to de-mould the foam and obtain the foam. In particular, during the step (c), the foam formed from the foam composition does not collapse.

The first pre-determined period of time and the second pre-determined period of time may be as described above.

The pre-determined rate of impact may be any suitable rate of impact. For example, the pre-determined rate of impact may be such that the impact between the foam composition and the third mould is minimal. According to a particular aspect, the pre-determined rate of impact may be about ≤20 mm/second (mm/s). In particular, the pre-determined rate of impact may be about ≤15 mm/s, ≤10 mm/s, ≤8 mm/s, ≤5 mm/s, ≤3 mm/s. Even more in particular, the pre-determined rate of impact may be ≤5 mm/s. The time of impact between the foam composition and the third mould may be controlled to correspond to the time for the gelling reaction of the foam composition.

The method may further comprise a step removing a layer from the surface of foam formed from the foam composition after the step (c). In particular, the step of removing comprises removing a layer of integral skin from the surface of the foam formed from the foam composition. The layer of integral skin removed from the surface of the foam may be attached to the surface of the first mould. Even more in particular, during the blowing reaction, an integral skin may be formed on the surface of the foam formed from the foam composition. If a breathable fabric-laminated foam article is required, it may be necessary to remove the integral skin after the separating of step (c).

"X" may be defined as the distance between the two opposite surfaces of the foam formed from the foam composition in contact with the first mould and the second mould respectively. In particular, "X" may be defined as the distance between the surface of the first mould to which the foam composition is provided and the surface of the second mould in contact with the foam composition after step (b). "Y" may be defined as the thickness of the foam formed from the foam composition after step (d). According to a particular aspect, X is greater than Y. Even more in particular, the ratio of X:Y may be 1.05:1 - 2:1. The ratio of X:Y may be dependent on the fabric-laminated foam article manufactured.

The method may further comprise a step of heating the first mould and the second mould to a pre-determined temperature before the step (a). The pre-determined temperature may be any suitable temperature, depending on the foam composition used in the method. In particular, the pre-determined temperature may be about 40-80°C.

The contacting of step (d) may comprise contacting the third mould with any suitable fabric as described above.

In the step (d) of the fabric contacting a surface of the foam, the surface of the fabric contacting a surface of the foam is opposite to the surface of the fabric in contact with the third mould.

According to a particular aspect, the step (d) may be repeated at least once. The repetition of step (d) may be as described in relation to the repetition of step (c) of the method according to the first aspect of the present invention.

According to a particular aspect, the method may further comprise a step of trimming the fabric laminated foam article after the step (f). In this way, it is possible to achieve the desired shape and size of the fabric laminated foam article.

The moulds used in the method according to any aspect of the present invention may be made of any suitable material. For example, the mould may be made of aluminium, high density polyethylene. The mould may also be made of polymer, metal or wood.

The methods of the present invention are advantageous as the problem of penetration is avoided. This is achieved in view of the sequential closure of the moulds. In particular, the gel time of the foam composition is synchronised with the contacting of the fabric with the foam formed from the foam composition. At this point, the viscosity of the foam composition would have increased so that penetration of the foam composition into the fabric does not occur. Further, the adhesive property of the foam to the fabric is maintained at its maximum. The foam formed from the foam composition may have a uniform distribution of cells and a uniform cell structure.

According to a third aspect, there is provided an article of manufacture comprising the fabric laminated foam article manufactured according to any method described above. The article of manufacture may be any suitable article of manufacture. For example, the article of manufacture may comprise, but is not limited to, a car seat, a head rest, furniture, a diving suit or protective clothing. The article of manufacture may also comprise a breast covering garment. In particular, the breast covering garment may be a bra, particularly a bra cup.

The present invention also provides a foam composition comprising at least one polyol, at least one isocyanate and at least one catalyst, wherein the polyol comprises a cross-linking polyol. In particular, the foam composition comprises at least 10% by weight of at least one cross-linking polyol. The cross-linking polyol may have a molecular weight between 350-3800 Da. In particular, the cross-linking polyol may have a molecular weight of about 500-3500 Da, 750-3000 Da, 1000-2500 Da, 1500-2000 Da. The at least one polyol, isocyanate and catalyst may be as described above. The foam composition may further comprise other additives as described above.

The foam composition may also be used in the method according to any aspect of the present invention.

The present invention also provides a method of preparing a foam composition for use fabric-laminated foam articles comprising the step of adding: at least one polyol, the polyol comprising a cross-linking polyol; at least one isocyanate; and at least one catalyst. The method may comprise adding at least 10% by weight of at least one cross-linking polyol. The cross-linking polyol may have a molecular weight of about 350-3800 Da. In particular, the cross-linking polyol may have a molecular weight of about 500-3500 Da, 750-3000 Da, 1000-2500 Da, 1500-2000 Da. The method may further comprise the step of providing the foam composition prepared to a mould assembly as described above to form a foam. In particular, the further steps may be as described in the methods according to any aspect of the present invention.

Having now generally described the invention, the same will be more readily understood through reference to the following examples which are provided by way of illustration, and are not intended to be limiting.

### EXAMPLES

The present example exemplifies the manufacture of a two-sided fabric laminated car seat.

### Formulation preparation

Four separate formulations were prepared as indicated as P1, P2, P3, and P4 respectively, in Table 1:

**Table 1: Components of formulations P1, P2, P3 and P4 (Units of each of the components are per 100 parts of polyol (pphp)) and conditions of preparing articles using the formulations.**

| | **P1** | **P2** | **P3** | **P4** |
|---|---|---|---|---|
| **Polyol** | | | | |
| Base polyol: Lupranol 2046 (BASF) | 22 | | | |
| Base polyol: Lupranol 2090 (BASF) | 52 | | | |
| Cross-linking polyol: Lupranol VP 9350 (BASF) | 11 | 10 | | 100 |
| Styrene acrylonitrile (SAN) polyol: Lupranol 4800N (BASF) | 15 | | | |
| Base polyol: Voranol 4701 (Dow) | | 75 | 85 | |
| SAN polyol: Hyperlite 1639 (Bayer Material Science) | | 15 | | |
| SAN polyol: Voranol 3943A (Dow) | | | 15 | |
| Total Polyol | 100 | 100 | 100 | 100 |
| | | | | |

| **Catalyst** | | | | |
|---|---|---|---|---|
| Gelling catalyst: Tegoamin 33 (Evonik) | 3.0 | 3.0 | 2.0 | 3.0 |
| Blowing catalyst: Tegoamin BDE (Evonik) | 0.2 | 0.18 | 0.18 | 0.2 |
| | | | | |

| **Other additives** | | | | |
|---|---|---|---|---|
| 1^{st} order surfactant: Tegostab B4690 (Evonik) | 0.4 | 0.4 | 0.4 | 0.8 |
| 2^{nd} order Surfactant: Tegostab 8736LF2 (Evonik) | 0.2 | 0.2 | 0.2 | |
| Polyether amine: CTA 6000 Tri amine (Clarient) | | 2.0 | | |
| Cell opening agent: Ortegol 500 (Evonik) | 2.5 | 2.5 | 2.5 | |
| Blowing agent: Water | 3.5 | 3.5 | 3.5 | 3.5 |
| | | | | |

| **Isocyanate** | | | | |
|---|---|---|---|---|
| Specflex 134 polymeric MDI (Dow Chemicals) | 40 | 40 | 40 | 42 |
| | | | | |

| **Conditions** | | | | |
|---|---|---|---|---|
| Polyol tank Temp (°C) | 30 | 30 | 30 | 30 |
| Isocyanate Tank Temp (°C) | 28 | 28 | 28 | 28 |
| Polyol mixing pressure (Bar) | 160 | 160 | 160 | 160 |
| Isocyanate mixing pressure (Bar) | 175 | 175 | 175 | 175 |
| Curing time (seconds) | 90 | 90 | 90 | 90 |

### Method of preparing fabric laminated foam articles

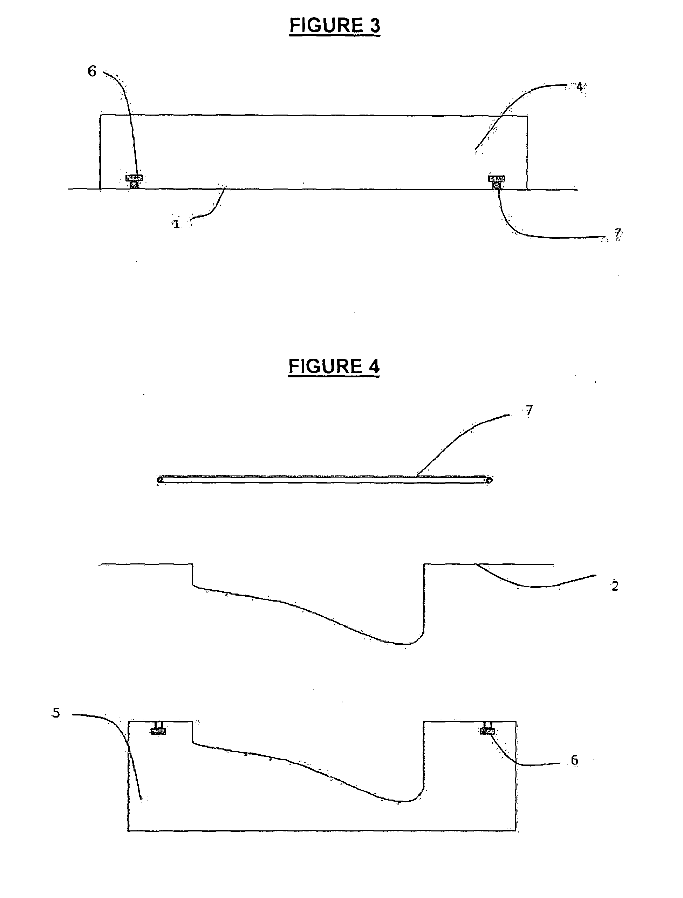

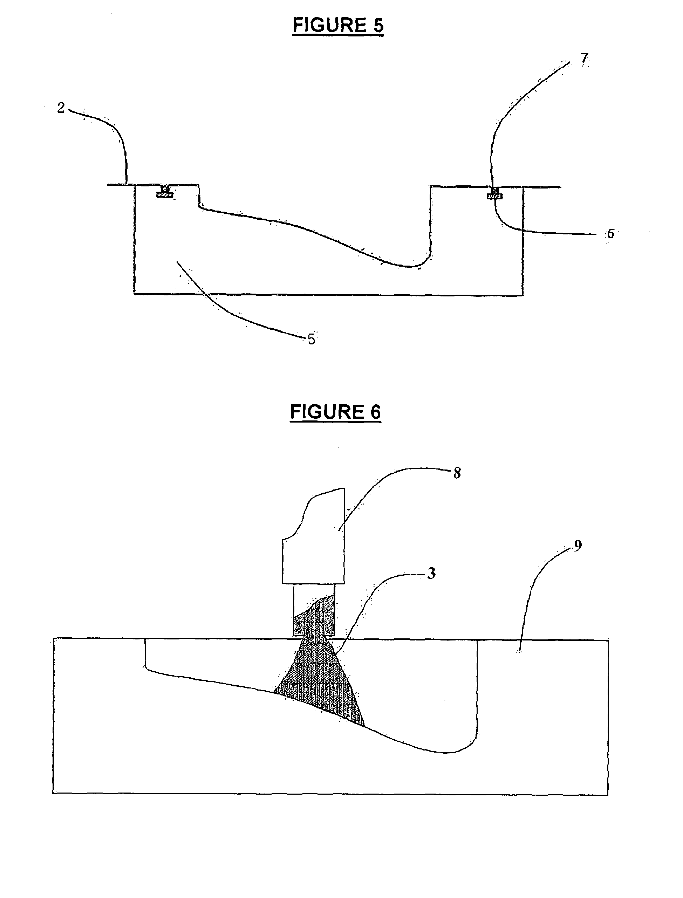

The apparatus and process used for preparing a fabric laminated car seat is as shown in Figures 2 to 9. Referring to Figures 2 to 5, there is provided a first male mould **4** and a first female mould **5** each comprising an inbuilt permanent magnet **6.** Pre-moulded male fabric liner **1** and pre-moulded female fabric liner **2** match the first male mould **4** and the first female mould **5,** respectively. Each of pre-moulded male fabric liner **1** and pre-moulded female fabric liner **2** are formed of 100% polyester interlock fabric having a weight of 300 grams per square meter (gsm). The pre-moulded male fabric liner **1** is magnetically clamped onto the first male mould **4** by a fabric clamping ring **7** (see Figures 2 and 3). Similarly, the pre-moulded female fabric liner **2** is also magnetically clamped onto the first female mould **5** by another fabric clamping ring **7** (see Figures 4 and 5). In particular, steel wire rings **7** having a diameter of about 3 mm are inserted into grooves embedded with permanent magnets **6.**

Each of the first male mould **4** and the first female mould **5** is made of aluminium and constructed such that each mould has its own temperature regulated water circulated heating system (not shown).

The apparatus also comprises a motor (not shown) which drives the first male mould **4** during the use of the apparatus.

There is also provided a second male mould **10** and a second female mould **9** which are made of the same material as the first male mould **4** and the first female mould **5.** The second male mould **10** and the second female mould **9** are regulated at a differential temperature at 45°C and 70°C, respectively, by water circulating thermal regulators (not shown).

In use, the second female mould **9** is kept stationary while formulation P1 as shown in Table 1 is mixed dosed with a Henneke MX mixhead **8** (Henneck Microline 45 machine with a MX8 mixhead for doses 10g to 100g per second; and Henneck Baseline 1400F machine with a MX8 or MX12 mixhead for doses from 150g to 2000g per second). The mixhead **8** is connected to an isocyanate and polyol mixing tank. The pressure of the mixhead **8** is as shown in Table 1. The mixing time in the mixhead **8** is about 1.5 seconds and the polyol and isocyanate tank temperatures are maintained at about 30°C and 28°C, respectively. The pressure in the polyol and isocyanate tanks are maintained at about 160 bar and 175 bar, respectively. 2000 g of the formulation P1 is poured into the cavity of the second female mould **9** (see Figure 6).

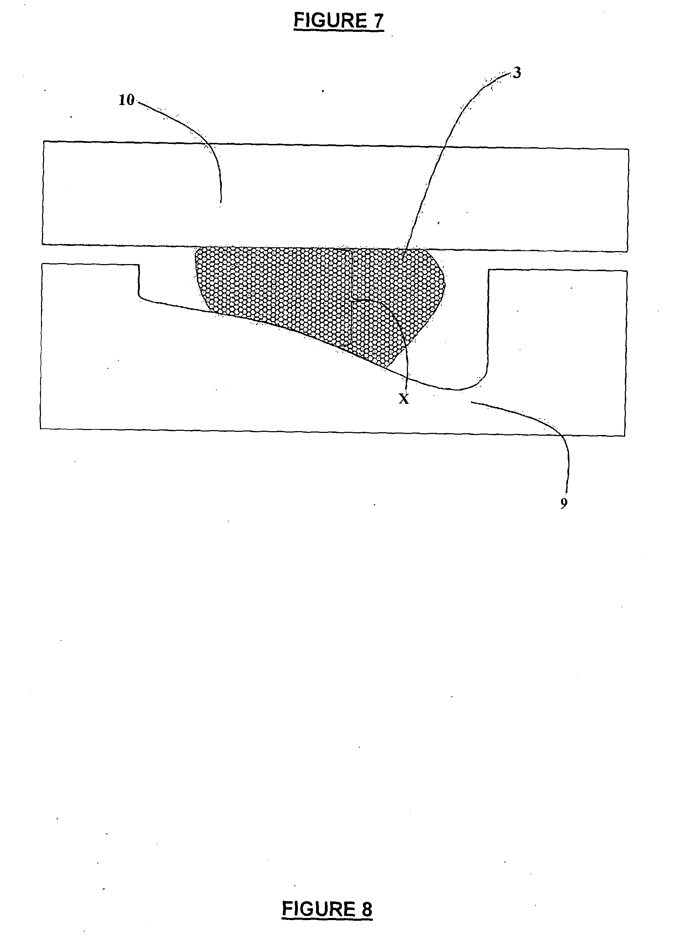

3 seconds after the formulation P1 has been poured into the cavity of the second female mould **9,** the second male mould **10** is lowered towards second female mould **9** at a rate of 10 mm/second. A Festo servo unit (MTR-AC-5S-3s-AB) (not shown) capable of operational speeds of between 0.01 to 100 mm/second was used to control the rate of impact of the second male mould **10** and the second female mould **9.** During this time, the foam **3** formed from the formulation is allowed to rise freely through the gap between the second male mould **10** and the second female mould **9** as illustrated in Figure 7. In particular, the distance between the surface of the cavity of the second female mould **9** and the surface of the second male mould **10** in contact with the surface of the foam **3** is denoted as "X" in Figure 7.

After the formulation P1 has completed the full blow reaction, second male mould **10** is raised and separated from second female mould **9** after 20 seconds.

Subsequently, first male mould **4** lined with pre-moulded male fabric liner **1** is lowered towards foam **3** at a rate of about 15 mm/second until the pre-moulded male fabric liner **1** is in contact with foam **3** (see Figure 8). The foam **3** is then allowed to cure for about 5 seconds, thereby allowing the foam 3 to adhere to the pre-moulded male fabric liner **1.** The thickness of the cured foam **3** is denoted as "Y" in Figure 8. In particular, the ratio of X:Y is 1.05:1.

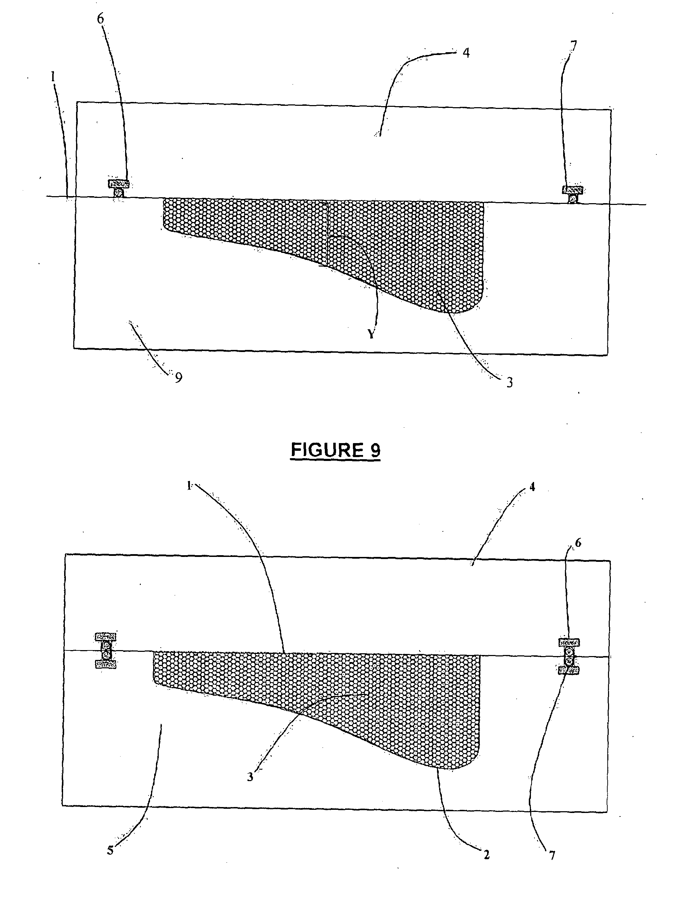

The first male mould **4** together with the foam **3** which is adhering to the pre-moulded male fabric liner **1** is then raised, and subsequently lowered towards the first female mould **5** lined with pre-moulded female fabric liner **2** at a rate of about 15 mm/second until the foam **3** is in contact with the pre-moulded female fabric liner **2** (see Figure 9). In particular, the first male mould **4** together with the foam **3** is lowered towards the first female mould **5** lined with pre-moulded female fabric liner **2** after about 2 seconds subsequent to the raising of the first male mould **4.** The foam **3** is then allowed to completely cure further for about 90 seconds, thereby allowing the foam **3** to adhere to the pre-moulded female fabric liner **2.**

Once the curing is completed, the first male mould **4** is raised while keeping the first female mould **5** stationary with foam **3** adhering to the first female mould **5.** The foam **3,** laminated with the pre-moulded male fabric liner **1** and the pre-moulded female fabric liner **2,** is de-moulded from the first female mould **5.** The fabric laminated foam may then be trimmed and stitched as necessary.

The process is repeated using formulations P2, P3 and P4 with the conditions as described in Table 1 to obtain further finished products.

### Analysis of foam obtained from formulations P1 to P4

The penetration for each of the finished products formed from the four formulations P1, P2, P3 and P4 were examined under UV light at 254nm by the absence/ presence of UV florescence. The lamination quality is measured against standard AATCC 124/143. The results are shown in Table 2.

**Table 2: Properties of articles formed from formulations P1, P2, P3 and P4.**

| **Properties** | **P1** | **P2** | **P3** | **P4** |
|---|---|---|---|---|
| Breathability | Good | Good | Good | Moderate |
| Even cell distribution | Good | Good | No | Moderate |
| Penetration | No | No | No | No |
| Fabric adhesion | Good | Good | No | Good |
| Cell collapse after separation of moulds | No | No | Yes | No |

As shown in Table 1, the formulation P1 containing two base polyols and one cross-linker polyol in combination with the isocyanate and catalysts yielded the most compatible balanced system. With respect to formulation P2, the use of the polyether amine together with the one base polyol was comparable to the foam obtained from formulation P1.

The foam formed from formulation P3 lacked fabric adhesion and collapsed during the initial raising of second male mould **10** as a result of the lack of cross-linker polyol. In contrast, for formulation P4, despite only one polyol being comprised in the formulation, i.e. the cross-linker polyol, good fabric adhesion was achieved with the foam formed from the formulation as well as substantially good cell distribution and breathability.

## Claims

1. A method for the manufacture of a fabric laminated foam article comprising the steps of:
(a) providing a foam composition comprising at least one polyol, at least one isocyanate and at least one catalyst to a mould assembly;
(b) obtaining a foam formed from the foam composition from the mould assembly after a first pre-determined period of time;
(c) contacting a fabric to at least one surface of the foam; and
(d) optionally curing the foam for a second pre-determined period of time, wherein during the step (b), the foam does not collapse, and wherein the first pre-determined period of time is the time taken for the foam composition to blow completely.

2. The method according to claim 1, wherein the step (b) comprises de-moulding a foam formed from the foam assembly.

3. The method according to claim 1 or claim 2, comprising repeating step (c) at least once.

4. The method according to any preceding claim, further comprising a step of removing a layer from a surface of foam formed from the foam composition before the step (c).

5. The method according to any preceding claim, wherein the at least one polyol comprises a cross-linking polyol.

6. The method according to any preceding claim, wherein the at least one polyol comprises a primary hydroxyl group terminated polyol.

7. The method according to any preceding claim, wherein the at least one isocyanate comprises an isocyanate content of 2.4-49%.

8. The method according to any preceding claim, wherein the at least one isocyanate comprised in the foam composition is in an amount of 20-100 parts per hundred parts (pphp) of polyol.

9. The method according to any preceding claim, wherein the at least one catalyst comprises a gelling catalyst and a blowing catalyst.

10. The method according to claim 9, wherein the ratio of the gelling catalyst to the blowing catalyst comprised in the foam composition is 5:1 to 30:1.

11. The method according to any preceding claim, wherein the foam composition further comprises at least one surfactant.

12. The method according to claim 11, wherein the foam composition comprises a first order surfactant and a second order surfactant.

13. The method according to any preceding claim, wherein the foam composition further comprises a blowing agent.

14. The method according to claim 1, wherein the method comprises the steps of:
(i) providing a foam composition comprising at least one polyol, at least one isocyanate and at least one catalyst to a first mould;
(ii) bringing a second mould and the first mould towards each other to enable the second mould to contact the foam composition;
(iii) separating the first mould and the second mould after a first pre-determined period of time to obtain a foam formed from the foam composition;
(iv) contacting a fabric with a third mould, the fabric further contacting a surface of the foam at a pre-determined rate of impact;
(v) curing the foam composition for a second pre-determined period of time to form a foam article; and
(vi) removing the foam article,
wherein during the step (iii), the foam does not collapse, and wherein the first pre-determined period of time is the time taken for the foam composition to blow completely.

15. An article of manufacture comprising a fabric laminated foam article manufactured by the method according to any of the preceding claims.

## Patentansprüche

1. Verfahren zur Herstellung eines stoffbeschichteten Schaumstoffartikels, das die Schritte umfasst des:
(a) Lieferns einer Schaumstoffzusammensetzung umfassend mindestens ein Polyol, mindestens ein Isocyanat und mindestens einen Katalysator an eine Formanordnung;
(b) Erhaltens eines aus der Schaumstoffzusammensetzung gebildeten Schaumstoffs aus der Formanordnung nach einer ersten vorbestimmten Zeitspanne;
(c) Kontaktierens eines Stoffs mit mindestens einer Oberfläche des Schaumstoffs; und
(d) wahlweisen Aushärtens des Schaumstoffs für eine zweite vorbestimmte Zeitspanne,
wobei, während des Schritts (b), der Schaumstoff nicht zusammenfällt und wobei die erste vorbestimmte Zeitspanne die Zeit ist, die vergeht, bis die Schaumstoffzusammensetzung vollständig aufgebläht ist.

2. Verfahren nach Anspruch 1, wobei der Schritt (b) das Entformen eines aus der Schaumstoffanordnung gebildeten Schaumstoffs umfasst.

3. Verfahren nach Anspruch 1 oder Anspruch 2, umfassend das Wiederholen von Schritt (c) mindestens einmal.

4. Verfahren nach einem der vorhergehenden Ansprüche, des Weiteren einen Schritt umfassend des Entfernens einer Schicht von einer Oberfläche von Schaumstoff, der aus der Schaumstoffzusammensetzung gebildet worden ist, vor Schritt (c).

5. Verfahren nach einem der vorhergehenden Ansprüche, wobei das mindestens eine Polyol ein Vernetzungspolyol umfasst.

6. Verfahren nach einem der vorhergehenden Ansprüche, wobei das mindestens eine Polyol ein durch eine primäre Hydroxylgruppe terminiertes Polyol umfasst.

7. Verfahren nach einem der vorhergehenden Ansprüche, wobei das mindestens eine Isocyanat einen Isoyanatgehalt von 2,4-49 % umfasst.

8. Verfahren nach einem der vorhergehenden Ansprüche, wobei das mindestens eine Isocyanat, das in der Schaumstoffzusammensetzung enthalten ist, in einer Menge von 20-100 Teilen pro hundert Teilen (pphp) Polyol vorliegt.

9. Verfahren nach einem der vorhergehenden Ansprüche, wobei der mindestens eine Katalysator einen Gelbildungskatalysator und einen Treibkatalysator umfasst.

10. Verfahren nach Anspruch 9, wobei das Verhältnis des Gelbildungskatalysator zum Treibkatalysator, die in der Schaumstoffzusammensetzung enthalten sind, 5:1 zu 30:1 beträgt.

11. Verfahren nach einem der vorhergehenden Ansprüche, wobei die Schaumstoffzusammensetzung des Weiteren mindestens ein Tensid umfasst.

12. Verfahren nach Anspruch 11, wobei die Schaumstoffzusammensetzung ein Tensid erster Ordnung und ein Tensid zweiter Ordnung umfasst.

13. Verfahren nach einem der vorhergehenden Ansprüche, wobei die Schaumstoffzusammensetzung des Weiteren ein Treibmittel umfasst.

14. Verfahren nach Anspruch 1, wobei das Verfahren die Schritte umfasst des:
(i) Lieferns einer Schaumstoffzusammensetzung umfassend mindestens ein Polyol, mindestens ein Isocyanat und mindestens einen Katalysator an eine erste Form;
(ii) Bringens einer zweiten Form und der ersten Form aufeinander zu, um es der zweiten Form zu ermöglichen, die Schaumstoffzusammensetzung zu kontaktieren;
(iii) Trennens der ersten Form und der zweiten Form nach einer vorbestimmten Zeitspanne, um einen Schaumstoff zu erhalten, der aus der Schaumstoffzusammensetzung gebildet ist;
(iv) Kontaktierens eines Stoffs mit einer dritten Form, wobei der Stoff des Weiteren eine Oberfläche des Schaumstoffs mit einer vorbestimmten Auffschlaggeschwindigkeit kontaktiert;
(v) Aushärtens der Schaumstoffzusammensetzung für eine zweite vorbestimmte Zeitspanne, um einen Schaumstoffartikel zu bilden; und
(vi) Entfernens des Schaumstoffartikels,
wobei, während Schritt (iii), der Schaumstoff nicht zusammenfällt und wobei die erste vorbestimmte Zeitspanne die Zeit ist, die vergeht, bis die Schaumstoffzusammensetzung vollständig aufgebläht ist.

15. Herstellungsartikel umfassend einen stoffbeschichteten Schaumstoffartikel, der durch das Verfahren nach einem der vorhergehenden Ansprüche hergestellt wird.

## Revendications

1. Procédé de fabrication d'un article de mousse à revêtement textile comprenant les étapes de :
(a) fourniture d'une composition de mousse comprenant au moins un polyol, au moins un isocyanate et au moins un catalyseur au niveau d'un ensemble moule ;
(b) l'obtention d'une mousse formée à partir de la composition de mousse depuis l'ensemble moule après une première période prédéterminée de temps ;
(c) la mise en contact d'un textile avec au moins une surface de la mousse ; et
(d) éventuellement le durcissement de la mousse sur une seconde période prédéterminée de temps ;
dans lequel, durant l'étape (b), la mousse ne s'effondre pas, et dans lequel la première période prédéterminée de temps est le temps nécessaire pour que la composition de mousse s'expanse entièrement.

2. Procédé selon la revendication 1, dans lequel l'étape (b) comprend le démoulage d'une mousse formée à partir de l'ensemble mousse.

3. Procédé selon la revendication 1 ou la revendication 2, comprenant la répétition de l'étape (c) au moins une fois.

4. Procédé selon l'une quelconque des revendications précédentes, comprenant en outre une étape d'élimination d'une couche d'une surface de la mousse formée à partir de la composition de mousse avant l'étape (c).

5. Procédé selon l'une quelconque des revendications précédentes, dans lequel le au moins un polyol comprend un polyol de réticulation.

6. Procédé selon l'une quelconque des revendications précédentes, dans lequel le au moins un polyol comprend un polyol terminé par un groupe hydroxyle primaire.

7. Procédé selon l'une quelconque des revendications précédentes, dans lequel le au moins un isocyanate comprend une teneur en groupes isocyanate de 2,4 à 49 %.

8. Procédé selon l'une quelconque des revendications précédentes, dans lequel le au moins un isocyanate compris dans la composition de mousse est présent en une quantité de 20 à 100 parties pour cent parties (ppcp) de polyol.

9. Procédé selon l'une quelconque des revendications précédentes, dans lequel le au moins un catalyseur comprend un catalyseur de gélification et un catalyseur de soufflage.

10. Procédé selon la revendication 9, dans lequel le rapport du catalyseur de gélification au catalyseur de soufflage, compris dans la composition de mousse, est de 5:1 à 30:1.

11. Procédé selon l'une quelconque des revendications précédentes, dans lequel la composition de mousse comprend en outre au moins un tensioactif.

12. Procédé selon la revendication 11, dans lequel la composition de mousse comprend un tensioactif de premier ordre et un tensioactif de second ordre.

13. Procédé selon l'une quelconque des revendications précédentes, dans lequel la composition de mousse comprend en outre un agent de soufflage.

14. Procédé selon la revendication 1, dans lequel le procédé comprend les étapes de :
(i) fourniture d'une composition de mousse comprenant au moins un polyol, au moins un isocyanate et au moins un catalyseur au niveau d'un premier moule ;
(ii) le rapprochement d'un second moule et du premier moule l'un vers l'autre pour permettre au second moule d'entrer en contact avec la composition de mousse ;
(iii) la séparation du premier moule et du second moule après une première période prédéterminée de temps pour obtenir une mousse formée à partir de la composition de mousse ;
(iv) la mise en contact d'un textile avec un troisième moule, le textile entrant en outre en contact avec une surface de la mousse à une vitesse prédéterminée d'impact ;
(v) le durcissement de la composition de mousse durant une seconde période prédéterminée de temps pour former un article en mousse ; et
(vi) le retrait de l'article en mousse,
dans lequel durant l'étape (iii), la mousse ne s'effondre pas, et dans lequel la première période prédéterminée de temps est le temps pris pour que la composition de mousse s'expanse entièrement.

15. Article de manufacture comprenant un article de mousse stratifié sur un textile fabriqué grâce au procédé selon l'une quelconque des revendications précédentes.
